# EUROPEAN PATENT APPLICATION

(11) **EP 2 781 736 A1**
(43) Date of publication of application: **24.09.2014**
(21) Application number: 13382097.7
(22) Date of filing: 19.03.2013
(51) Int. Cl.: F03D 7/02

(54) **Wind turbine and method**

(71) Applicant: Alstom Renovables España, S.L., 08005 Barcelona (ES)
(72) Inventor: Palomares Rentero, Pedro, 08005 Barcelona (ES); Castell Martínez, Daniel, 08960 Sant Just Desvern (ES)
(74) Representative: ZBM Patents - Zea, Barlocci & Markvardsen

(57) **Abstract**

A wind turbine comprising a tower, a fixed reference structure on top of the tower, and a rotor having a rotor hub with one or more turbine blades. The wind turbine further comprising one or more pitch actuators for rotating one or more of the turbine blades about their longitudinal axes, a pitch power supply for supplying power to the pitch actuators, and a mechanical transmission for transmitting energy from the rotation of the rotor hub relative to the fixed reference structure to the pitch power supply. A first part of the mechanical transmission is connected to the rotor and a second part of the mechanical transmission is connected to the fixed reference structure.

## Description

### Technical field

The present disclosure relates to wind turbine generators, in particular wind turbine generators comprising systems for adjusting the pitch angle of blades thereof, i.e. rotating one or more blades substantially along their longitudinal axes. The present disclosure further relates to methods of manufacturing and methods of retrofitting existing wind turbines.

### Background Art

Modern wind turbines are commonly used to supply electricity into the electrical grid. Wind turbines of this kind generally include a rotor comprising a rotor hub and a plurality of blades. The rotor is set into rotation under the influence of the wind on the blades. The rotation of the rotor shaft drives the generator rotor either directly ("directly driven wind turbine" or "direct drive wind turbine") or through the use of a gearbox.

An important auxiliary system generally provided on wind turbines is a pitch system. Pitch systems may be employed for adapting the position of a wind turbine blade to varying wind conditions by rotating the blade along its longitudinal axis. In this respect, it is known to rotate a wind turbine blade in such a way that it generates less lift (and drag) when the wind speed increases. This way, even though the wind speed increases, the torque transmitted by the rotor to the generator may remain substantially the same.

It is furthermore also known to rotate wind turbine blades towards their stall position (so as to reduce the lift on the blades) when the wind speed increases. These wind turbines are sometimes referred to as "active-stall" wind turbines.

When a turbine is temporarily stopped or taken out of operation for e.g. maintenance, pitching may furthermore also be used for rotation of the blade towards its vane position (e.g. at or around 90 deg. pitch angle), where the blade surface is substantially parallel to the wind direction to minimize the loads on the blades.

Pitch systems normally comprise one or more pitch actuators for rotating one or more blades substantially along their longitudinal axes. In particular, these may be rotary or linear actuators, usually mounted inside the rotor hub. Many pitch systems comprise an electric motor in the hub which drives an actuating gear. Said actuating gear (pinion) meshes with an annular gear provided on the wind turbine blade to set the wind turbine blade into rotation. It is also possible however, that the annular gear is provided on the hub, whereas the electric motor and actuator are mounted on the blade. Other actuating mechanisms, such as e.g. involving hydraulic actuators such as for example a hydraulic piston, are also known.

It is further known to provide an individual pitch system (comprising e.g. a separate motor and separate control) for each wind turbine blade of a rotor. It is also known to provide a common pitch system wherein the pitch angle of the blades is the same for all blades on a rotor. Such a common pitch system may comprise a single motor or may comprise a plurality of motors or actuators, typically one for each blade.

Pitch actuators require some kind of power supply for operation, usually hydraulic or electric power. This is usually provided by the wind turbine's main generator. Such an arrangement imposes a further load on the main generator and normally requires a rotary joint, either hydraulic or electric, for power to be transmitted from the nacelle of the wind turbine to the rotor hub. Such a rotary joint may be complex and thus expensive. Additionally, the actuators will usually require some form of a power accumulator as a backup (e.g. a battery) for when the main generator is switched offline e.g. when the connection with the grid is lost or for when there is some other malfunction, e.g. in the rotary joint between hub and nacelle.

In examples of the present disclosure, such problems may be avoided or at least partially reduced.

### Summary

In a first aspect, a wind turbine comprising a tower, a fixed reference structure on top of the tower, and a rotor having a rotor hub with one or more turbine blades is provided. The wind turbine further comprises one or more pitch actuators for rotating one or more of the turbine blades about their longitudinal axes, a pitch power supply for supplying power to the pitch actuators, and a mechanical transmission for transmitting energy from the rotation of the rotor hub relative to the fixed reference structure to the pitch power supply. A first part of the mechanical transmission is connected to the rotor and a second part of the mechanical transmission is connected to the fixed reference structure.

By obtaining power for the pitch actuator power supply at the rotor hub, there is no need for rotary joints in order to transmit power from the nacelle to the rotor hub. Furthermore, the main generator does not need to bear the additional load of the pitch actuators. In addition, the pitch system may be self-powered, as it is able to use the inertial rotation of the rotor hub as a power source for the pitch actuators, for example in emergency situations. The power may thus be available even if there is total malfunction of the main turbine systems, for example when the grid connection is lost.

In some examples, the fixed reference structure may be a frame extending outwardly from the tower, wherein a proximal side of the frame is mounted on the tower and the rotor hub is rotatably mounted on the frame near a distal end thereof, and wherein the second part of the mechanical transmission is connected to the frame. By providing the hub rotatably mounted on the frame, movements due to bending loads of the hub may be significantly reduced. The mechanical transmission may thus be improved.

In some examples, said first part of the mechanical transmission may comprise a first gear attached to the rotor hub, and said second part of the mechanical transmission comprises a second gear attached to the frame for meshing with the first gear. Gears are able to provide a robust power transmission without slippage. In particular, the gears may be a pinion gear and an annular gear. The annular gear may be arranged on the frame, whereas the pinion is arranged with the rotor and meshes with the annular gear. In other embodiments, the first and second parts of the mechanical transmission may be meshing helical gears. Yet another possibility is for the first part of the transmission to be a worm gear, and the second part of the transmission (arranged on the frame) may be a wheel gear. Yet a further option is for the transmission to be made of a conical pinion and a conical crown.

In some examples, the mechanical transmission may be friction based. In a further embodiment, the first part of the mechanical transmission may be a roller and the second part of the mechanical transmission may be a pad, further comprising a spring element for engaging the roller with the pad. This has the advantage that even if there are variations in the distance between frame and rotor hub, the power transmission may still be maintained.

Alternatives to the above mechanical transmission embodiments include: a sprocket attached to the rotor hub, a sprocket attached to the frame, and a roller chain for meshing with said sprockets; or a pulley attached to the rotor hub, a pulley attached to the frame, and a belt for connecting said pulleys; or a toothed pulley attached to the rotor hub, a toothed pulley attached to the frame, and a toothed belt for meshing with said pulleys.

The mechanical transmission may be connected between the rotor hub and a distal end of the frame, or between the rotor hub and a proximal end of the frame. Thus, the second part of the mechanical transmission may be located at a distal end of the frame or at a proximal end of the frame. This may facilitate construction by avoiding other more cluttered areas of the rotor hub and may facilitate maintenance by providing easy access.

In some examples, a rotor shaft may be connected to the rotor hub, rotatably mounted in the nacelle, and the second part of the mechanical transmission may be connected to the nacelle. Optionally, the first part of the mechanical transmission may comprise a first gear attached to the rotor hub, and the second part of the mechanical transmission may comprise a second gear attached to the nacelle for meshing with the first gear.

In some examples, the pitch power supply may comprise a hydraulic pump, in the rotor hub, arranged to be operated by the mechanical transmission. In particular, there may be a controllable hydraulic load element connected to the hydraulic pump for obtaining a braking force of the rotation of the rotor by the hydraulic pump. In another aspect, the hydraulic pump may be reversible as a hydraulic motor and may thus be able to aid in rotating the rotor. In another aspect, the pitch power supply may comprise a hydraulic accumulator in the rotor hub, the accumulator being advantageous to accumulate energy for powering the pitch system, namely for when a slow rotation of the rotor hub does not transmit enough power to the pitch power supply.

In some examples, the pitch power supply may comprise an electric generator, in the rotor hub, arranged to be operated by the mechanical transmission. In particular, there may be a controllable electric load element connected to the electric generator for obtaining a braking force of the rotation of the rotor by the electric generator. In another aspect, the electric generator may be reversible as an electric motor and may thus be able to aid in rotating the rotor. In another aspect, the pitch power supply may comprise a battery in the rotor hub, the battery being advantageous to accumulate energy for powering the pitch system, namely for when a slow rotation of the rotor hub does not transmit enough power to the pitch power supply.

The ability to brake the wind turbine employing the mechanical transmission as a stand-alone system, but also when complementing the wind turbine main braking systems. It may be particularly useful for emergency braking as braking can be completely powered by the rotor hub rotation and thus, no external power is required for braking.

For a full stop of the wind turbine, wind turbines may need to rotate the wind turbine blades into the vane position. In examples of the invention, this may be carried out before, during or after the braking of the rotor hub. In case of e.g. grid loss it is important that the wind turbine blades can be rotated to the vane position. According to examples, the pitch actuators may be powered from the energy of the wind turbine. In some examples, the blades may be pitched partly before, actively starting to brake the wind turbine. In other examples, there is no need to wait with the braking. The energy of rotation may be sufficient to power the pitch systems so as to rotate the blades to the vane position, before the wind turbine comes to a halt. Many different examples of control are possible. This is particularly useful for emergency operation (e.g. grid loss) as the pitch systems according to examples can be completely powered by the rotor hub rotation and thus, no external power is required for rotating the wind turbine blades into the vane position.

In some examples, the wind turbine control systems may be configured to maintain enough rotation of the rotor hub, when braking the turbine for a full stop, such that enough energy is transmitted to the pitch power supply in order to fully turn the blades to vane position before total stopping of the rotor hub. This is advantageous particular if no power accumulator or only a power accumulator with a relatively small capacity for powering the pitch power supply is provided in the rotor hub. It may be ensured that the rotor hub does not stop before the pitch actuators are able to fully complete the motion of the blades to the vane position.

The power accumulator may also be used for starting up the wind turbine. If the blades are initially in the vane position, the accumulator can provide power to the pitch actuators such that the blades are rotated into an operating pitch position and start the rotation of the rotor by action of the wind.

Alternatively, if a pitch power supply accumulator is not provided, the wind turbine control systems may be configured to use a small motor or even the main generator (reversed in its use as a motor) to initiate the rotation of the wind turbine. This rotation will power the pitch power supply - according to the embodiments described - which will enable the pitch actuators to rotate the blades into an operating pitch position and start the rotation of the rotor by action of the wind.

In other examples, the electric generator or hydraulic pump which power the pitch actuators power supply, may be used in reverse as motors to rotate the rotor hub. This may be useful particularly for maintenance operations of the wind turbine, in particular when other rotation systems are unavailable.

In some examples, the pitch power supply may be independent for each turbine blade, such that in particular the pitch actuator(s) of each blade have their own hydraulic pump or electric generator. The effect hereof may be to render the system more fail-safe.

In some examples, the pitch power supply may be common for all turbine blades, such that, in particular, the hydraulic pump(s) or electric generator(s) are shared by all blade actuators. This arrangement may have a relatively simple construction. In particular, a single hydraulic pump or electric generator may be provided for a wind turbine. In particular, two hydraulic pumps or two electric generators may be provided for a wind turbine, which has the advantage of having a symmetrical load. In yet another example, one hydraulic pump (or electric generator) may be provided for each blade.

The disclosure also relates to processes for manufacturing a wind turbine as any one of the wind turbines presently described, comprising a step of installing a mechanical transmission for transmitting energy from the rotation of the rotor hub relative to the frame towards the pitch power supply, wherein a first part of the mechanical transmission is connected to the rotor and a second part of the mechanical transmission is connected to the fixed reference structure.

The disclosure also relates to processes for retrofitting an existing wind turbine for obtaining a wind turbine as any one of the wind turbines presently described, comprising a step of installing said a transmission for transmitting energy from the rotation of the rotor hub relative to the fixed reference structure towards the pitch power supply, wherein a first part of the mechanical transmission is connected to the rotor and a second part of the mechanical transmission is connected to the fixed reference structure. The fixed reference structure may be a frame carrying the rotor hub. In other embodiments, the fixed reference structure may be the nacelle or part of the nacelle.

### Brief Description of the Drawings

Particular embodiments of the present invention will be described in the following by way of non-limiting examples, with reference to the appended drawings, in which:

Figure 1 schematically illustrates a wind turbine according to an embodiment of the present disclosure;

Figure 2 schematically illustrates an alternative embodiment of a wind turbine according to the present disclosure;

Figure 3 schematically illustrates the rotor hub area of a wind turbine according to an embodiment of the present disclosure;

Figure 4 schematically illustrates the rotor hub area of a wind turbine according to another embodiment of the present disclosure;

Figure 5 schematically illustrates the rotor hub area of a wind turbine according to still another embodiment of the present disclosure;

Figure 6 schematically illustrates a wind turbine according to a further embodiment of the present disclosure; and

Figure 7 schematically illustrates a hydraulic circuit of a wind turbine according to an embodiment of the present disclosure.

### Detailed description

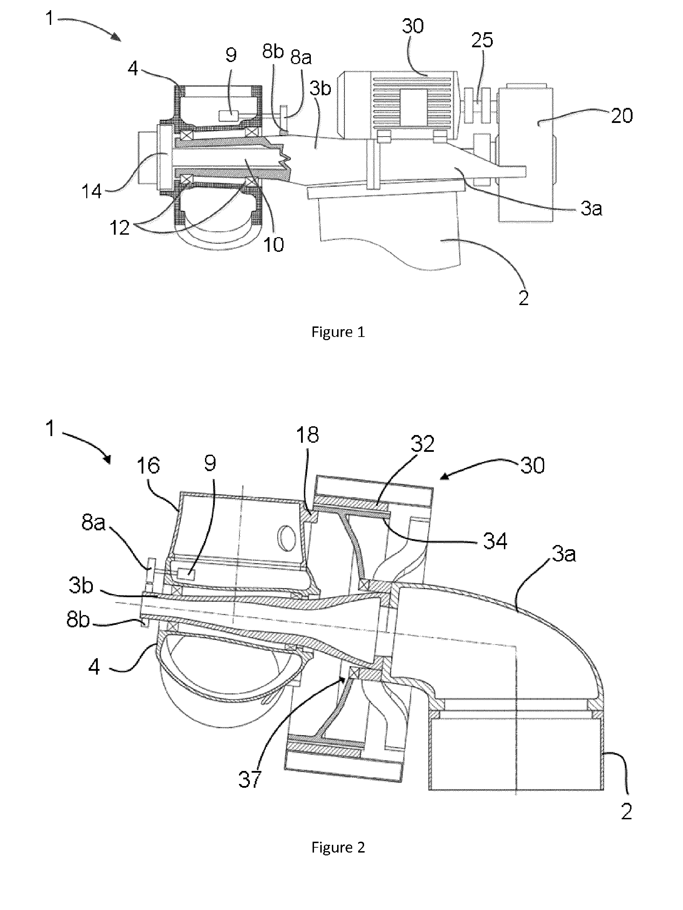

Figure 1 shows a wind turbine (1) comprising a rotor hub (4) and a plurality of blades (not shown). The wind may set the rotor into rotation. A coupling plate (14) mounted at or near an end of the rotor shaft (10) transmits this rotation to the shaft (10). This rotor shaft (10) may also be referred to as low speed shaft. The low speed shaft (10) forms the input shaft for the gearbox (20). The high speed shaft (or "generator shaft") (25) drives the generator rotor of main generator (30).

The coupling of plate (14) with hub (4) may be flexible such as substantially not to transmit bending loads of the rotor to the rotor shaft, and only transmit torque from the rotor hub to the rotor shaft. The flexible coupling between hub and rotor shaft may be e.g. substantially such as described in US 4,757,211 including flexible bushings. In an alternative example, the flexible coupling between hub and rotor shaft may be substantially as described in WO 2011/120721 with a centre piece mounted on the rotor shaft including radially extending spokes and flexible elements arranged between these spokes and protrusions on the hub.

The wind turbine according to this example may comprise a frame (3) mounted atop a wind turbine tower (2). Frame (3) extends outwardly from the tower (2), i.e. the frame may extend in the downwind or in the upwind direction depending on the configuration of the wind turbine. By rotatably mounting the rotor hub on such a frame, bending loads such as due to the weight of the rotor are transmitted to the frame and then to the tower. These loads are thus not transferred to a rotor shaft of generator rotor.

In this example, the frame may comprise a rear frame (3a) mounted on a wind turbine tower and a front frame (3b). Rear frame (3a) may be rotated by a suitable yaw system to rotate around the tower's longitudinal axis with the goal of aligning (or intentionally misaligning) the wind turbine rotor with the wind direction. A proximal side of the frame may thus be mounted on the tower.

The rotor hub (4) may be rotatably mounted on the frame (3b) near a distal end of the frame. Any suitable bearings may be used. In this example, two rolling element bearings (12) are illustrated, a front bearing and a rear bearing. The wind turbine (1) may comprise one or more pitch actuators for rotating one or more of the turbine blades about their longitudinal axes. The embodiment includes a pitch power supply for supplying power to the pitch actuators.

A mechanical transmission (8) for transmitting energy from the rotation of the rotor hub (4) relative to the frame (3) to the pitch power supply is provided, wherein a first part (8a) of the mechanical transmission is connected to the rotor and a second part (8b) of the mechanical transmission is connected to the frame (3). And the power generated in this mechanical transmission is directly available in the hub. In figure 1, a pinion (8a) is arranged to mesh with an annular gear (8b). The annular gear may also be referred to as a "wheel gear".

As the rotor hub rotates with respect to the frame, the pinion (8a) connected to the hub is thus set into rotation. The pinion may be arranged on a shaft, and the shaft may be used to drive e.g. a hydraulic pump (9), or alternatively an electric generator.

In this embodiment, the second part of the mechanical transmission for transmitting power to the pitch power supply can be at a proximal end of the frame (3) - the mechanical transmission (8) is connected between the rotor hub (4) and a proximal end of the frame (3). Because the rotor hub is connected at the front with the turbine shaft, placing the mechanical transmission (8) for transmitting power to the pitch power supply at the proximal end of the frame (3) may facilitate construction by avoiding other more cluttered areas of the rotor hub (4) of the gearbox turbine and facilitates maintenance by its straightforward unimpeded access.

In this example, the mechanical transmission between hub and frame may be close to one of the rotatable supports of the rotor hub (4), the rear bearing (12). An aspect of this arrangement is that it may reduce the distance variations between frame (3) and hub (4), thus improving the coupling / meshing between the first and second parts of the mechanical transmission.

Figure 2 illustrates a direct drive wind turbine (1) comprising a wind turbine tower (2), with an outward extending frame (3). Also in this example, the frame may comprise a rear frame (3a) and a front frame (3b). In the various examples however, one integral frame could also be used, or alternatively a frame may be split in more than two sections also in accordance with circumstances.

In this example, as in the previous example, rear frame (3a) may carry the wind turbine's main generator (30). Main generator (30) may comprise a generator rotor (34) and a generator stator (32). A direct coupling may be provided between the rotor and the generator rotor. In this example, one or more protrusions (18) may be integrally formed with an extender (16). These protrusions (18) may be coupled to the generator rotor. In alternative embodiments, the protrusions may be integrally formed or otherwise attached to the rotor hub or to the wind turbine blades.

The couplings between the rotor and the generator rotor may be flexible such that they do not transmit bending loads from the rotor to the generator. The air gap between stator and rotor may thus be maintained more constant. In some examples, the flexible couplings may be established by flexible elements between the protrusions and the generator rotor. In particular, the flexible elements may "yield" easily in the axial direction so as to substantially not transmit bending loads and only transmit torque.

Similar to the previous example, a frame extending away from the tower is provided. There is a mechanical transmission (8a, 8b) for transmitting energy from the rotation of the rotor hub (4) relative to the frame (3) to the pitch power supply, wherein a first part of the mechanical transmission (8a) is connected to the rotor and a second part of the mechanical transmission (8b) is connected to the frame (3). Power is transmitted from this mechanical transmission to a pitch power supply (9). This pitch power supply may be a hydraulic pump (9) in case a hydraulic pitch system is used. Alternatively an electric generator may be used as pitch power supply, in case of an electro(-mechanic) pitch system.

In the examples of figures 1 and 2, a single mechanical transmission with a single pitch power supply is disclosed. In other examples, a plurality of such transmissions may be used. Using a single mechanical transmission may be relatively cheap. Regardless of whether a single mechanical transmission or a plurality of such transmissions is used, individual pitch control or common pitch control may be implemented.

In this example, the second part of the mechanical transmission (8b) can be at a distal end of the frame (3), thus the mechanical transmission (8a, 8b) is connected between the rotor hub (4) and a distal end of the frame (3). Since this power transmission is in the front (i.e. upwind), it may facilitate installation as it avoids other more cluttered areas. The unimpeded access also facilitates maintenance. Also, since the transmission is relatively close to a rotatable support of the rotor hub (4), the bearing (12), distance variations between frame (3) and hub (4) may be reduced or avoided.

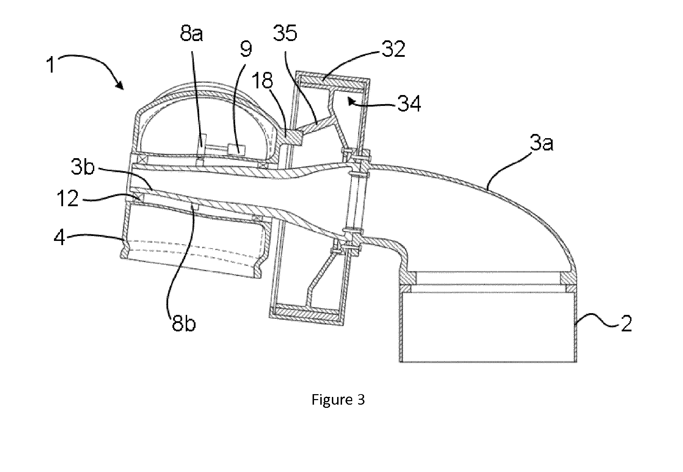

Figure 3 illustrates another example of a direct drive wind turbine. One or more axial protrusions (18) in this example may be integrally formed or attached to the rotor hub (4). Similar couplings as described with reference to figure 2 may be provided between the protrusions (18) and parts of the generator rotor carrying structure (35) which carries (electro)magnetic means, such as permanent magnets or coils.

Contrary to the previously illustrated example, the mechanical transmission (8a, 8b) between hub and frame is located substantially midway along the rotor hub (4). In particular, at least part of the mechanical transmission is placed in the space between the rotor hub (4) and frame (3). This kind of arrangement enables a relatively compact construction. At the same time, the transmission is automatically protected from e.g. weather influences. Access for maintenance may be provided from inside of the frame (e.g. a through-hole in the frame) or from inside of the hub.

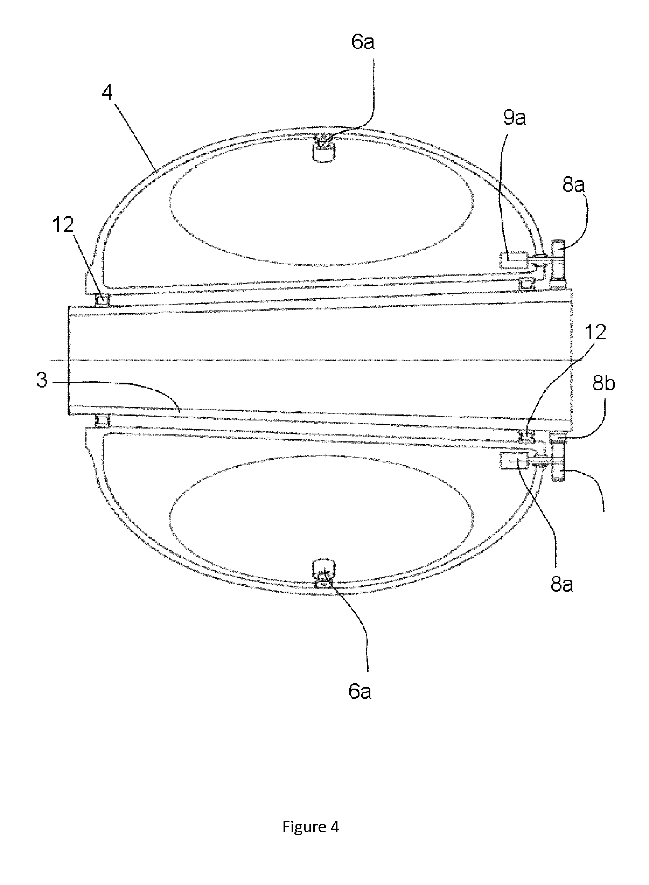

Figure 4 shows the rotor hub (4) area of another embodiment. In this example, a pair of mechanical transmissions is provided (8a, 8b). Also illustrated are pitch actuators (6a) for rotating the turbine blades about their longitudinal axes. In this embodiment, the second part of the mechanical transmission (8b) is at a proximal end of the frame (3). In this example, the actuators (6a) depicted are rotary, but other types are possible, such as linear actuators. The rotary actuators may be pinions that mesh with an annular gear. The pinions may be powered by a hydraulic motor or by an electric motor. Reduction gearing may be used between the motor and the pinion.

Having two mechanical transmissions (8a, 8b) and two electric generators or hydraulic pumps (9), makes the system inherently safer to failure. The number of mechanical transmissions may be independent from whether individual pitch is used or not. The number of mechanical transmissions therefore may or may not coincide with the number of blades of the rotor.

In this example, the second parts of the mechanical transmissions (8b) for transmitting power to the pitch power supply can be at a proximal end of the frame (3) - the mechanical transmission (8b) is connected between the rotor hub (4) and a proximal end of the frame (3) and may be positioned relatively close to the rear bearing (12).

Mechanical transmissions such as the ones illustrated in this figure (and in the previous figures) may also be used for braking and reducing the speed of rotation of the rotor. When a turbine needs to be shut down, the wind turbine blades may generally need to be rotated to a vane position. The power necessary for this rotation may be derived from the rotation of the hub. The power supply may be controlled such as to actively brake the rotation the rotor. For example, in case of an electric generator, the generator torque may be controlled such as to help slow down the rotor. Similarly, if a hydraulic system is used, a load element may be used to slow down the rotor. An aspect of having a plurality of mechanical transmissions is that the braking loads may be more symmetrically divided.

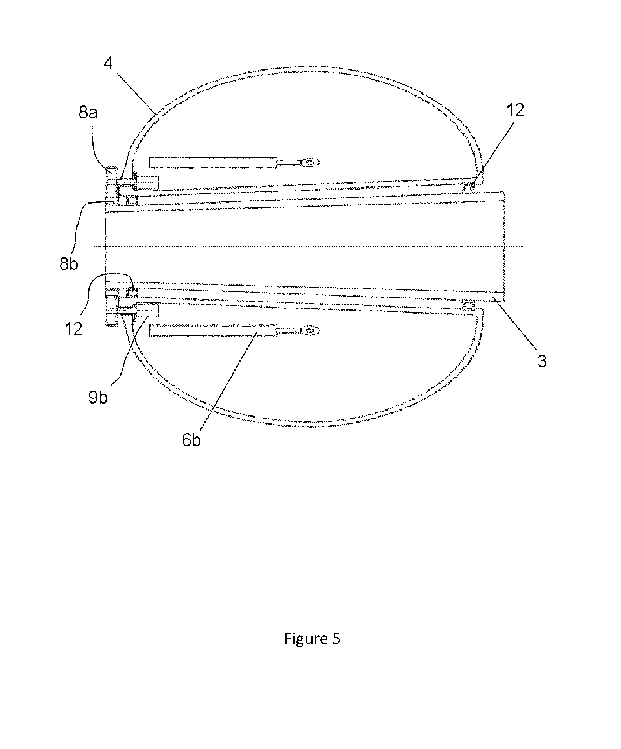

Figure 5 shows the rotor hub (4) area of another embodiment. Also in this embodiment, the mechanical transmission is provided duplicated (8a, 8b). Also shown are linear hydraulic pitch actuators (6b) for rotating the turbine blades (5) about their longitudinal axes. In this example, the second part of the mechanical transmission (8b) is at a distal end of the frame (3). In this example, the depicted actuators (6b) are linear, but other types are possible, such as rotary actuators.

In all previously illustrated examples, the mechanical transmissions between rotor hub and frame have been depicted as a pinion meshing with an annular gear (or "wheel gear"). However, in other examples, other types of transmissions may be used, such as e.g. friction based systems involving a roller operatively coupled to the hub and a pad (e.g. an elastomer pad) mounted on the frame. Optionally, a spring or other system may be used to push the roller in contact with the pad.

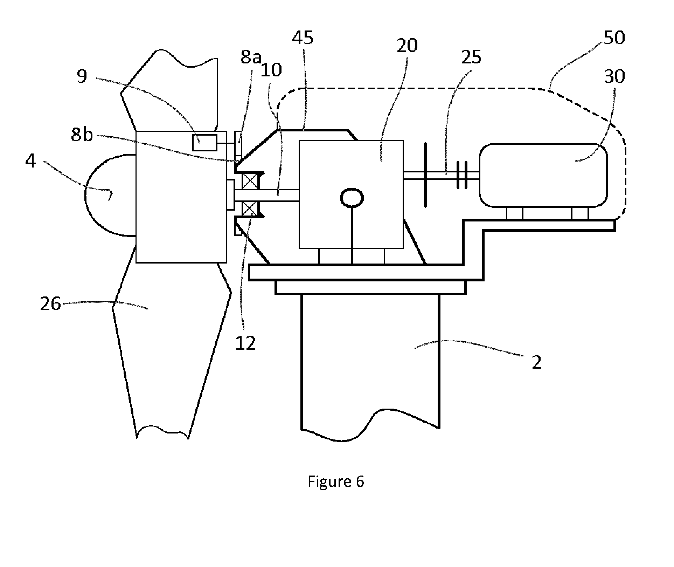

Figure 6 illustrates another example. A wind turbine including a rotor (4) with a plurality of blades (26). A rotor shaft (10) is connected to the rotor (4). In this example, the rotor shaft is rotatably mounted through bearing (12) in a bearing support (45). Bearing support (45) is part of nacelle (50) mounted on top of the wind turbine tower (2).

The rotor shaft (10) may function as a "low speed shaft" and be the input shaft for gearbox (20). A high speed shaft (25) drives the rotor of generator (30). The generator (30) is also arranged in the nacelle (50).

In this example, no frame similar to the previous examples is provided. In this example, the rotor shaft is rotatably mounted in the bearing support and the rotor is mounted at the end of the rotor shaft. In the previous examples, the rotor hub (instead of the rotor shaft) was shown to be rotatably mounted.

Also in this example, pitch power supply (9) is available directly in the rotor hub (4). To this effect, an annular gear (8b) is arranged on the nacelle (50). The annular gear (50) may be mounted e.g. on the bearing support (45). A pinion (8a) is operatively connected with the hub. The pinion meshes with the annular gear (8b). Rotation of the rotor shaft (and hub) with respect to the nacelle thus may serve to transmit mechanical power to the rotor hub.

Alternatively, another form of transmission may be arranged between the nacelle and the rotor hub (4). In this kind of arrangement, it is possible that the rotor shaft deforms more than would be the case in previously described drive train configurations. In case of significant deformations or movements, another form of mechanical transmission may be more suitable. For example, a first part of the mechanical transmission may be a roller attached to the hub. The second part of the mechanical transmission may be a pad, e.g. attached to bearing support (45). Furthermore, a spring element for forcing the roller in engagement with the pad may be provided. In such an arrangement, the mechanical transmission may be established continuously in spite of bending movements and deformations.

In all previously illustrated examples, the mechanical transmission was shown to be similar including a pinion mounted on a shaft connected to the hub, the pinion engaging with an annular gear arranged on a fixed reference structure. However, other mechanical transmissions are possible, such as e.g. meshing helical gears. Alternatively, a worm gear and a wheel gear may be used. Yet a further option is for the transmission to be made of a conical pinion and a conical crown.

In some embodiments, the mechanical transmission may be friction based. Yet further alternatives include: a sprocket attached to the rotor hub, a sprocket attached to the frame, and a roller chain for meshing with said sprockets; or a pulley attached to the rotor hub, a pulley attached to the frame, and a belt for connecting said pulleys; or a toothed pulley attached to the rotor hub, a toothed pulley attached to the frame, and a toothed belt for meshing with said pulleys.

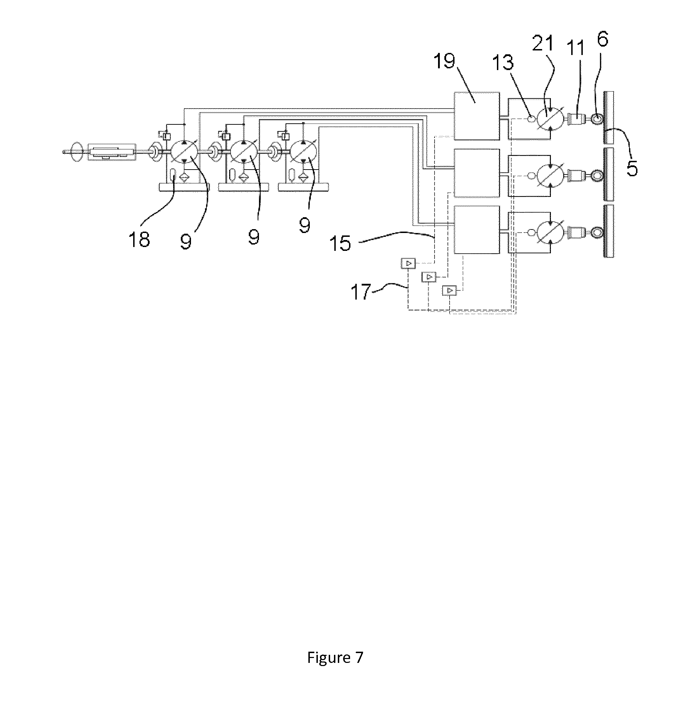

Figure 7 shows an example of a hydraulic circuit for powering the pitch actuators (6) for rotating turbine blades about their longitudinal axes which may be used in various of the previously illustrated embodiments. A pitch power supply may be powered by a mechanical transmission between hub and frame. The pitch power supply may comprise a hydraulic pump (9) and a hydraulic accumulator (18). As the hub rotates about the frame, the hydraulic pump is driven, and energy (pressurized fluid) is stored in the hydraulic accumulator (18). A flow control system (19) including valves may be used to power hydraulic motor (21) by the hydraulic fluid stored in the hydraulic accumulator (18).

The hydraulic motor (21) may drive a pinion (6) that meshes with an annular gear (5) of the pitch system. A gearbox (11) may be used to transform the rotation of the motor (21) into rotation of the pinion (6). The annular gear (5) may be mounted on a wind turbine blade or on the hub. A position sensor (13) may be used to provide feedback signals (17) about the position of the motor. From this feedback mechanism, control signals (15) can be generated to control valves of the flow control system (19).

In this example, three mechanical transmissions between hub and frame are shown. Each of these transmissions in this example may be used to power the pitch system of one of the blades.

The hydraulic flow control system may include or may act like a load element connected to the hydraulic pump for obtaining a braking force of the rotation of the rotor by the hydraulic pump. This has the advantage of providing braking means, whether alternative or instead of other braking means that act directly on the shaft.

In some examples, an auxiliary pitch power supply may be provided in the rotor hub. This auxiliary pitch power supply may be electric or hydraulic and may be used for rotating the blades at start-up. At start-up, no power can be derived yet from the rotation of the hub with respect to the frame, so the auxiliary pitch power supply may be used for this purpose.

In alternative examples, as an auxiliary power supply, an electric or hydraulic connection with the main generator and/or electrical grid may be used for start-up purposes. In yet further alternative examples, such a connection between hub and main generator / electrical grid may be used as a main power supply for the pitch systems, and the before-described mechanical transmissions are provided as a backup power supply system, e.g. in case that the connection with the grid is lost.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. Wind turbine comprising a tower;
a fixed reference structure on top of the tower, and
a rotor having a rotor hub with one or more turbine blades,
the wind turbine further comprising one or more pitch actuators for rotating one or more of the turbine blades about their longitudinal axes,
a pitch power supply for supplying power to the pitch actuators, and
a mechanical transmission for transmitting energy from the rotation of the rotor hub relative to the fixed reference structure to the pitch power supply, wherein a first part of the mechanical transmission is connected to the rotor and a second part of the mechanical transmission is connected to the fixed reference structure.

2. A wind turbine according to claim 1, wherein the fixed reference structure is a frame extending outwardly from the tower, wherein
a proximal side of the frame is mounted on the tower and the rotor hub is rotatably mounted on the frame near a distal end thereof, and wherein
the second part of the mechanical transmission is connected to the frame.

3. A wind turbine according to claim 2, wherein said first part of the mechanical transmission comprises a first gear attached to the rotor hub, and said second part of the mechanical transmission comprises a second gear attached to the frame for meshing with the first gear.

4. A wind turbine according to claim 3, wherein said first gear is a pinion and said second gear is an annular gear.

5. A wind turbine according to claim 1, wherein said mechanical transmission is friction based.

6. A wind turbine according to claim 5, wherein said first part of the mechanical transmission is a roller and said second part of the mechanical transmission is a pad, further comprising a spring element for engaging the roller with the pad.

7. A wind turbine according to any of claims 2 - 6, wherein said second part of the mechanical transmission is located at a distal end of the frame or at a proximal end of the frame.

8. A wind turbine according to any of claims 1, and 5 - 7, further comprising a rotor shaft connected to the rotor hub, and wherein
the fixed reference structure is a nacelle and the rotor shaft is rotatably mounted in the nacelle, and
the second part of the mechanical transmission is connected to the nacelle.

9. A wind turbine according to claim 8, wherein said first part of the mechanical transmission comprises a first gear attached to the rotor hub, and said second part of the mechanical transmission comprises a second gear attached to the nacelle for meshing with the first gear.

10. A wind turbine according to any of claims 1-9, wherein said pitch power supply comprises a hydraulic pump arranged to be operated by the mechanical transmission.

11. A wind turbine according to claim 10, further comprising a controllable hydraulic load element connected to the hydraulic pump for obtaining a braking force of the rotation of the rotor by said hydraulic pump.

12. A wind turbine according to claim 10 or 11, wherein the hydraulic pump is reversible as a hydraulic motor.

13. A wind turbine according to any of claims 10 - 12, wherein the pitch power supply comprises a hydraulic accumulator.

14. A wind turbine according to any of claims 1 - 9, wherein the pitch power supply comprises an electric generator arranged to be operated by the mechanical transmission.

15. A wind turbine according to claim 14, further comprising a controllable electric load element connected to the electric generator for obtaining a braking force of the rotation of the rotor by said electric generator.

16. A wind turbine according to claim 14 or 15, wherein the electric generator is reversible as an electric motor.

17. A wind turbine according to any of claims 14 - 16, wherein the pitch power supply comprises a battery.

18. A process for retrofitting an existing wind turbine for obtaining a wind turbine as in any of claims 1 - 17 comprising the step of installing said mechanical transmission for transmitting energy from the rotation of the rotor hub relative to the fixed reference structure towards the pitch power supply, wherein a first part of the mechanical transmission is connected to the rotor and a second part of the mechanical transmission is connected to the fixed reference structure.
